# Europäisches Patentamt
## European Patent Office
## Office européen des brevets

(19)

(11) Veröffentlichungsnummer: **0 030 269**
**B1**

(12) ## EUROPÄISCHE PATENTSCHRIFT

(45) Veröffentlichungstag der Patentschrift:
28.09.83

(51) Int. Cl.³: **B 01 J 27/32**, C 07 C 125/065

(21) Anmeldenummer: **80106625.9**

(22) Anmeldetag: **29.10.80**

(54) Verfahren zur Rückführung des Edelmetallkatalysators bei der Herstellung aromatischer Urethane.

(30) Priorität: **14.11.79 DE 2945961**

(43) Veröffentlichungstag der Anmeldung:
**17.06.81 Patentblatt 81/24**

(45) Bekanntmachung des Hinweises auf die Patenterteilung:
**28.09.83 Patentblatt 83/39**

(84) Benannte Vertragsstaaten:
**BE DE FR GB IT NL**

(56) Entgegenhaltungen:
**DE-A-2 803 432**
**FR-A-2 330 663**
**US-A-3 998 755**
**US-A-4 083 800**

(73) Patentinhaber: **BASF Aktiengesellschaft,
Carl-Bosch-Strasse 38, D-6700 Ludwigshafen (DE)**

(72) Erfinder: **Merger, Franz, Dr., Max-Slevogt-Strasse 25,
D-6710 Frankenthal (DE)**
Erfinder: **Towae, Friedrich, Dr., Parkstrasse 22,
D-6700 Ludwigshafen (DE)**

**0 030 269**

Verfahren zur Rückführung des Edelmetallkatalysators bei der Herstellung
aromatischer Urethane

Die Erfindung betrifft ein Verfahren zur Wiedergewinnung und Rückführung des Edelmetallkatalysators bei der Herstellung aromatischer Urethane durch Umsetzung von aromatischen Nitroverbindungen oder aromatischen Aminen in Gegenwart von Oxydationsmitteln mit Hydroxylverbindungen und Kohlenmonoxid, wobei der Edelmetallkatalysator nach beendeter Urethanbildung in der Reaktionslösung mit Wasserstoff behandelt, das ausfallende Edelmetall abgetrennt und zusammen mit einer Halogenwasserstoffsäure erneut als Katalysator verwendet werden.

Die Herstellung von aromatischen Urethanen durch Umsetzung von aromatischen Nitroverbindungen, Hydroxylgruppen enthaltenden organischen Verbindungen und Kohlenmonoxid in Gegenwart von Katalysatoren wird beispielsweise in der DE-A-1 568 044 (US-A-3 467 694), DE-A-2 555 557 (GB-A-1 469 222), DE-B-2 603 574 (GB-A-1 472 243) und der europäischen Patentanmeldung 0 000 563 beschrieben.

Nach Angaben der deutschen Offenlegungsschrift 2 910 132 werden aromatische Urethane durch Umsetzung von aromatischen Aminen mit Hydroxylverbindungen, Kohlenmonoxid und Sauerstoff bzw. Nitroverbindungen als Oxydationsmittel bei erhöhter Temperatur und erhöhtem Druck in Gegenwart von Katalysatoren erhalten.

Als Katalysatoren für beide Verfahrensvarianten genannt werden Edelmetalle, wie Platin, Palladium, Ruthenium, Rhodium, Osmium und Iridium und chemische Verbindungen dieser Edelmetalle, beispielsweise deren Oxide, Sulfate, Nitrate, Halogenide, Acetate u. a. Die Edelmetallkatalysatoren werden vorzugsweise zusammen mit Cokatalysatoren, beispielsweise Lewissäuren, Stickstoff enthaltenden heterocyclischen Verbindungen, Eisen-, Kupfer- oder Zinnhalogeniden und tertiären Aminen, Lewissäuren und organischen primären Aminen, Harnstoffen, Biureten, Allophanaten oder deren Gemischen, Zinn-, Titan-, Eisen-, Quecksilber-, Nickel-, Vanadium-, Antimon-, Mangan-, Kobalt- und/oder Kupferverbindungen eingesetzt. Unter diesen Bedingungen gehen die Edelmetallkatalysatoren zum Teil im Verlauf der Reaktion in Lösung, so daß sie durch einfache mechanische Trennmethoden, wie Abdekantieren oder Abfiltrieren, aus der Reaktionslösung nicht wiedergewonnen werden können. Wird auf einen Träger elementar niedergeschlagenes Palladium als Katalysator eingesetzt, so zeigt die Analyse des vom Rückstand abgetrennten Reaktionsaustrages, daß auch bei dieser Methode erhebliche Mengen Palladium aufgelöst und somit ausgetragen werden. In allen Fällen müssen beträchtliche Verluste an Edelmetallen in Kauf genommen werden, wodurch diese Verfahren, insbesondere ihre großtechnische Durchführung, teuer und unwirtschaftlich werden.

Der Erfindung lag die Aufgabe zugrunde, den Verlust an Edelmetallkatalysatoren bei den an sich bekannten Verfahren zur Herstellung von aromatischen Urethanen aus aromatischen Nitroverbindungen oder aromatischen Aminen, Hydroxylverbindungen, Kohlenmonoxid sowie gegebenenfalls Oxidationsmitteln so zu verringern, daß die Verfahren sich wirtschaftlich gestalten und eine einmal eingesetzte Edelmetallkatalysatormenge über eine große Zahl von Reaktionszyklen wiederverwendet werden kann.

Es wurde nun gefunden, daß man die Edelmetallkatalysatoren bei der Herstellung von aromatischen Urethanen durch Umsetzung von aromatischen Nitroverbindungen oder aromatischen Aminen in Gegenwart von Oxidationsmitteln mit Hydroxylverbindungen und Kohlenmonoxid vorteilhaft zurückführen kann, wenn man

a) nach beendeter Urethanbildung den Edelmetallkatalysator in der Reaktionslösung mit Wasserstoff behandelt,
b) das in elementarer Form ausfallende Edelmetall abtrennt und
c) das Edelmetall zusammen mit einer Halogenwasserstoffsäure erneut als Katalysator verwendet.

Da durch das erfindungsgemäße Verfahren der Austrag an teurem Edelmetall überraschend gering gehalten werden kann, ist es nicht mehr unwirtschaftlich, relativ große Edelmetallkonzentrationen als Katalysator zu verwenden, ein Umstand, der sehr hohe Umsatzraten mit ausgezeichneten Selektivitäten speziell bei der Herstellung von aromatischen Di- und/oder Polyurethanen ermöglicht. Die Verfahren mit Edelmetallkatalysatoren werden dadurch erstmals wirtschaftlich praktikabel, und man braucht nicht mehr beispielsweise auf das toxische, ökologisch sehr problematische Selen als Katalysator auszuweichen.

Gemäß der Erfindung wird der Reaktionsaustrag nach beendeter Urethanbildung bei Temperaturen von 10 bis 160°C mit Wasserstoff behandelt, wobei es sich in vielen Fällen als vorteilhaft erwiesen hat, erhöhte Temperaturen, vorzugsweise 50 bis 150°C und Drücke von 1 bis 200 bar, vorzugsweise 2 bis 50 bar anzuwenden.

Die optimalen Behandlungsbedingungen können experimentell leicht ermittelt werden; sie sind gefunden, wenn die Edelmetallkatalysatoren möglichst quantitativ zu elementarem Metall reduziert werden, ohne daß die gebildeten Urethane angegriffen werden. Üblicherweise werden unter den genannten Reaktionsbedingungen zur Behandlung von einem Mol Edelmetallkatalysator 20 bis 500 Liter, vorzugsweise 20 bis 100 Liter Wasserstoff benötigt.

2

**0 030 269**

Durch die Wasserstoffbehandlung werden die Edelmetallkatalysatoren in die elementare Form übergeführt und aus der Reaktionslösung ausgefällt, aus der sie nun durch einfache, rein mechanische Trennmethoden, beispielsweise Abdekantieren, Zentrifugieren oder Filtrieren, leicht isoliert werden können.

Die wiedergewonnenen Edelmetalle werden zusammen mit einer Halogenwasserstoffsäure oder einer unter den Reaktionsbedingungen eine Halogenwasserstoffsäure erzeugenden Verbindung zurückgeführt und als Edelmetallkatalysator wiederverwendet. Pro Mol Edelmetall werden 1 bis 200 Mol, vorzugsweise 1,5 bis 50 Mol Halogenwasserstoffsäure oder Halogenwasserstoffsäure bildende Verbindung eingesetzt.

Geeignete Edelmetallkatalysatoren, die mit Hilfe des erfindungsgemäßen Verfahrens in die elementare Form übergeführt und isoliert werden können, sind beispielsweise Oxide, Sulfate, Nitrate, Acetate und/oder vorzugsweise Halogenide von Edelmetallen, wie z. B. Platin, Rhodium, Ruthenium, Osmium, Iridium und/oder vorzugsweise Palladium. Die Edelmetallkatalysatoren werden bei der Urethanherstellung in der Regel in katalytischer Menge, vorteilhaft von 0,001 bis 10, insbesondere 0,01 bis 5 Gew.-% Edelmetall — unabhängig von der tatsächlichen Konstitution oder Zusammensetzung des Katalysators — bezogen auf das aromatische Amin oder die Nitroverbindung verwendet.

Als Halogenwasserstoffsäuren werden neben Jodwasserstoff bevorzugt Chlorwasserstoff und Bromwasserstoff verwendet. Als Halogenwasserstoffsäure erzeugende Verbindungen kommen beispielsweise in Betracht die Hydrochloride und/oder Hydrobromide von aliphatischen oder aromatischen tertiären Aminen, wie Trimethylamin, Triethylamin, Tripropylamin, Dimethylanilin, Pyridin und/oder Chinolin.

Besonders bevorzugt ist Chlorwasserstoff, der gasförmig oder in gelöster Form, beispielsweise in dem den gewünschten Urethanen entsprechenden Alkohol der Reaktionsmischung zugesetzt werden kann.

Das erfindungsgemäße Verfahren zur Rückführung des Edelmetallkatalysators kann bei allen Verfahren zur Herstellung von aromatischen Urethanen Anwendung finden, bei denen in Gegenwart von Edelmetallkatalysatoren aromatische Nitroverbindung mit Hydroxylverbindungen und Kohlenmonoxid oder aromatische Amine mit Hydroxylverbindungen, Kohlenmonoxid und Oxidationsmittel zur Reaktion gebracht werden. Entsprechende Verfahren zur Herstellung von aromatischen Urethanen werden beispielsweise in den eingangs genannten DE-A-1 568 044, DE-A-2 555 557, DE-B-2 603 574, EP-A-0 000 563 und der deutschen Offenlegungsschrift 2 910 132 beschrieben.

In den genannten Publikationen werden auch die geeigneten Ausgangsverbindungen, wie die aromatischen Nitroverbindungen, aromatischen Amine, Hydroxylverbindungen und gegebenenfalls Oxidationsmittel sowie die erforderlichen Reaktionsparameter, beispielsweise Molverhältnisse, Reaktionstemperaturen -drücke und -zeiten ausführlich erörtert.

Das erfindungsgemäße Verfahren wird durch die folgenden Beispiele veranschaulicht.


### Beispiel 1

In einen 400 ml fassenden Stahlautoklaven werden 18,2 g 2,4-Dinitrotoluol, 150 g Ethanol, 150 mg Palladiumchlorid und 1,5 g Eisenchlorid gegeben. Die Luft im Autoklaven wird durch Stickstoff ersetzt, danach Kohlenmonoxid bis zu einem Druck von 250 bar aufgepreßt und die Mischung unter Rühren 2 Stunden lang auf 180° C erhitzt. Nach beendeter Reaktion läßt man abkühlen und entspannt. Danach werden Wasserstoff mit einem Druck von 5 bar in den Autoklaven gepreßt und die Mischung anschließend 1 Stunde lang auf 100° C erhitzt. Nach dem Abkühlen werden der Reaktionsaustrag filtriert, das Filtrat analysiert und der unlösliche Rückstand für weitere Versuche aufbewahrt.

Die Analyse zeigte, daß sich das eingesetzte 2,4-Dinitrotoluol quantitativ umgesetzt hatte, wobei 22,1 g 2,4-Bis-(Ethoxicarbonylamino)-toluol (83,1% der Theorie) und 2,7 g eines Gemisches aus 2-(Ethoxicarbonylamino)-4-nitrotoluol und 4-(Ethoxicarbonylamino)-2-nitrotoluol (13,8% der Theorie) entstanden sind, was einer Gesamtselektivität zu Urethanen von 97,0% entspricht. Mit der filtrierten Lösung wurden 0,27 mg ( =0,3%) Palladium ausgetragen.


### Vergleichsbeispiel A

Beispiel 1 wurde wiederholt, wobei jedoch der Reaktionsaustrag nicht nachträglich mit Wasserstoff behandelt wurde.

Die Analyse zeigte, daß sich das eingesetzte 2,4-Dinitrotoluol quantitativ umgesetzt hatte, wobei 21,1 g 2,4-Bis-(ethoxicarbonylamino)-toluol (79,3% der Theorie) und 3,5 Teile eines Gemisches aus 2-(Ethoxicarbonylamino)-4-nitro-toluol und 4-(Ethoxicarbonylamino)-2-nitro-toluol (18,0% der Theorie) entstanden sind, was einer Gesamtselektivität zu Urethanen von 97,3% entspricht. Mit der filtrierten Lösung wurden 3,9 mg ( =4,3%) Palladium ausgetragen.

3

## Beispiel 2

Beispiel 1 wird wiederholt, wobei jedoch kein frisches Palladiumchlorid zugegeben wird, sondern der unlösliche Rückstand aus Beispiel 1 als Katalysator eingesetzt wird. Zusätzlich werden 0,5 g Chlorwasserstoffsäure, gelöst in 20 ml Ethanol, zu dem Ansatz zugegeben.

Die Analyse zeigte, daß sich das eingesetzte 2,4-Dinitrotoluol quantitativ umgesetzt hatte, wobei 22,7 g 2,4-Bis-(ethoxicarbonylamino)-toluol (85,3% der Theorie) und 2,7 g eines Gemisches aus 2-(Ethoxicarbonylamino)-4-nitrotoluol und 4-(Ethoxicarbonylamino)-2-nitrotoluol (13,9% der Theorie) entstanden sind, was einer Gesamtselektivität zu Urethanen von 99,2% entspricht. Mit der filtrierten Lösung wurden 0,27 mg ( = 0,3%) Palladium ausgetragen.

## Vergleichsbeispiel B

Beispiel 1 wurde wiederholt, wobei jedoch anstelle von Palladiumchlorid der unlösliche Rückstand aus Vergleichsbeispiel A als Katalysator eingesetzt wurde.

Die Analyse zeigte, daß sich das eingesetzte 2,4-Dinitrotoluol praktisch quantitativ umgesetzt hatte, wobei 10,3 g 2,4-Bis-(ethoxicarbonylamino)-toluol (38,7% der Theorie) und 7,6 g eines Gemisches aus 2-(Ethoxicarbonylamino)-4-nitrotoluol und 4-(Ethoxidcarbonylamino)-2-nitrotoluol (39,2% der Theorie) entstanden sind, was einer Gesamtselektivität zu Urethanen von 77,9% entspricht. Mit der filtrierten Lösung wurden 5,2 mg ( = 5,8%) Palladium ausgetragen.

## Beispiele 3 bis 8

Um die Wirksamkeit des Chlorwasserstoffzusatzes zu zeigen, wurde ein weiterer Versuch gemäß Beispiel 1 durchgeführt und unter Rückführung des durch Filtration wiedergewonnenen Katalysators mehrmals wiederholt. Bei der vierten und fünften Wiederholung wurde zusätzlich in Ethanol gelöster Chlorwasserstoff zugegeben. Die Reaktionslösungen wurden außerdem gemäß Beispiel 1 mit Wasserstoff behandelt, vor und nach der Wasserstoffbehandlung wurde eine Probe genommen, filtriert und auf Palladiumgehalt untersucht. Die Ergebnisse sind in der nachfolgenden Tabelle zusammengefaßt.

Tabelle

| Beispiel Nr. | Katalysator % pro 2,4-Dinitro-toluol | Umsatz % 2,4-Dinitro-toluol | Umwandlung % 2,4-Bis-(ethoxicar-bonylamino)-toluol | Palladium vor H$_2$-Behandlung | Austrag % nach H$_2$-Behandlung |
|---|---|---|---|---|---|
| 3 | 1 % PdCl$_2$ 18 % FeCl$_3$ | 100 | 93 | 5,4 | 0,2 |
| 4 | Rückstand von 3 | 100 | 42 | 3,7 | 0,1 |
| 5 | Rückstand von 4 | 100 | 3 | 1,0 | 0,1 |
| 6 | Rückstand von 5 | 89 | 1 | 0,8 | 0,1 |
| 7 | Rückstand von 6 + 10 % HCl | 100 | 67 | 3,2 | 0,1 |
| 8 | Rückstand von 7 + 10 % HCl | 100 | 64 | 3,4 | 0,1 |

Die Beispiele zeigen, daß durch die Behandlung der Reaktionsmischung mit Wasserstoff der Katalysatoraustrag beträchtlich vermindert werden kann.

## Beispiel 9

In einen 400 ml fassenden Stahlautoklaven werden 6,7 g 2,4-Diaminotoluol, 100 g Ethanol, 350 mg eines mit 10% Palladium beladenen Kohleträgers und 0,5 g Eisenchlorid gegeben. Der Autoklav wird verschlossen und mit 200 bar Kohlenmonoxid und 50 bar Luft beschickt. Dann wird die Mischung unter Rühren 2,5 Stunden lang auf 180°C erhitzt. Nach beendeter Reaktion läßt man abkühlen, spült mit Stickstoff und entspannt. Nach dem Ziehen einer Probe (Palladium-Probe 1) wird Wasserstoff mit einem Druck von 4 bar in den Autoklaven gepreßt und die Mischung anschließend 1 Stunde lang auf 100°C erhitzt. Nach dem Abkühlen werden der Reaktionsaustrag filtriert und das Filtrat analysiert (Palladium-Probe 2).

Die Analyse zeigte, daß sich das eingesetzte 2,4-Diaminotoluol quantitativ umgesetzt hatte, wobei 9,4 g 2,4-Bis-(ethoxicarbonylamino)-toluol (64,3% der Theorie) und 2,1 g eines Gemisches aus 2-Amino-4-(ethoxicarbonylamino)-toluol und 4-Amino-2-(ethoxicarbonylamino)-toluol (19,7% der Thoerie) entstanden sind, was einer Gesamtselektivität zu Urethanen von 84% entspricht.

Palladium-Probe 1 (filtriert) enthielt 0,9 mg (=4,3%), Palladium-Probe 2 0,05 mg (0,2%) Palladium.

## Patentansprüche

1. Verfahren zur Rückführung des Edelmetallkatalysators bei der Herstellung aromatischer Urethane durch Umsetzung von aromatischen Nitroverbindungen oder aromatischen Aminen in Gegenwart von Oxidationsmitteln mit Hydroxylverbindungen und Kohlenmonoxid, dadurch gekennzeichnet, daß man

a) nach beendeter Urethanbildung den Edelmetallkatalysator in der Reaktionslösung mit Wasserstoff behandelt,
b) das in elementarer Form ausfallende Edelmetall abtrennt und
c) das Edelmetall zusammen mit einer Halogenwasserstoffsäure erneut als Katalysator verwendet.

2. Verfahren nach Anspruch 1, dadurch gekennzeichnet, daß man den Edelmetallkatalysator bei Temperaturen von 50 bis 150°C und Drücken von 2 bis 50 bar mit Wasserstoff behandelt.

3. Verfahren nach Anspruch 1, dadurch gekennzeichnet, daß man als Halogenwasserstoffsäuren Chlorwasserstoff, Bromwasserstoff oder Verbindungen, die unter den Reaktionsbedingungen der Urethanherstellung Chlorwasserstoff oder Bromwasserstoff bilden, verwendet.

4. Verfahren nach Anspruch 1, dadurch gekennzeichnet, daß man als Edelmetallkatalysator Palladiumchlorid verwendet.

## Claims

1. A process for recycling noble metal catalysts in the preparation of an aromatic urethane by the reaction of an aromatic nitro compound or aromatic amine, in the presence of an oxidizing agent, with a hydroxyl compound and carbon monoxide, wherein,

(a) after urethane formation is complete, the noble metal catalyst in the reaction solution is treated with hydrogen,
(b) the noble metal, precipitated in elementary form, is separated off, and
(c) the noble metal together with a hydrohalic acid is re-used as catalyst.

2. A process as claimed in claim 1, wherein the nobel metal catalyst is treated with hydrogen at a temperature of from 50 to 150°C and a pressure of from 2 to 50 bars.

3. A process as claimed in claim 1, wherein the hydrohalic acid used is hydrogen chloride, hydrogen bromide or compounds forming hydrogen chloride or hydrogen bromide under the reaction conditions of urethane manufacture.

4. A process as claimed in claim 1, wherein the noble metal catalyst used is palladium chloride.

## Revendications

1. Procédé pour le recyclage du catalyseur à métal précieux, lors de la préparation d'uréthanes aromatiques par réaction de composés nitrés aromatiques ou d'amines aromatiques, en présence d'agents oxydants, avec des composés hydroxylés et de l'oxyde de carbone, caractérisé par le fait que

a) après la fin de la formation d'uréthane, on traite le catalyseur à métal précieux, dans la solution de réaction, avec de l'hydrogène,
b) on sépare le métal précieux précipitant sous forme élémentaire
c) on réutilise, comme catalyseur, le métal précieux avec un acide halogénhydrique.

2. Procédé selon la revendication 1, caractérisé par le fait qu'on traite le catalyseur à métal précieux avec de l'hydrogène, à des températures de 50 à 150°C et des pressions de 2 à 50 bars.

3. Procédé selon la revendication 1, caractérisé par le fait qu'on utilise, comme acides halogénhydrique, de l'acide chlorhydrique, de l'acide bromhydrique ou des composés qui, dans les conditions de réaction de la préparation d'uréthane, forment de l'acide chlorhydrique ou bromhydrique.

4. Procédé selon la revendication 1, caractérisé par le fait qu'on utilise, comme catalyseur à métal précieux, du chlorure de palladium.